# EUROPEAN PATENT APPLICATION

(11) **EP 4 443 715 A1**
(43) Date of publication of application: **09.10.2024**
(21) Application number: 24163284.3
(22) Date of filing: 13.03.2024
(51) Int. Cl.: H02K 5/04, H02K 41/00, E05F 1/00, E06B 9/72

(54) **COVERING ELEMENT FOR A MOTORIZATION DEVICE**

(30) Priority: 15.03.2023 IT 202300004914
(71) Applicant: Teleco Automation S.R.L., 31100 Treviso (IT)
(72) Inventor: BORSOI, Luigi, 31012 CAPPELLA MAGGIORE (TV) (IT); COLLOVINI, Roberto, 31100 TREVISO (IT); LOPEZ VAZQUEZ, José Vicente, 31100 TREVISO (IT)
(74) Representative: Braidotti, Andrea

(57) **Abstract**

Cover element (1) for a motorizing device (2), said motorizing device (2) being of the type configured to provide a linear output movement and comprising:
- a primary or fixed portion (3) comprising a tubular casing (12),
- a secondary or mobile portion (3'),
- an electric motor housed in said tubular casing (12) and configured to cause the linear movement of said secondary or mobile portion (3') with respect to said primary or fixed portion (3),
- a primary attachment (14) associated with said fixed portion (3) and a secondary attachment (14') associated with said mobile portion (3'), said primary attachment (14) and said secondary attachment (14') being configured to be associated with respective elements of an installation to be moved mutually,
said covering element (1) being characterized by the fact that it includes a housing structure (4) having a substantially tubular shape and configured to house within it at least the tubular casing (12) of said fixed portion (3) of the motorization device (2).

## Description

### TECHNICAL FIELD

The present invention concerns a covering element for a motorization device, preferably of the type configured to provide a linear movement output.

The present invention also concerns a kit including said covering element and the motorization device.

The present invention also concerns an installation including said kit.

### PRIOR ART

Linear electric motors are known, in which a fixed portion sets a mobile portion in motion on a substantially straight trajectory and with a substantially oscillating "to- and-fro" motion. Generally the fixed portion defines a cavity from which the mobile portion enters and exits, at least partially. These well-known motors, thanks to the simplicity of construction combined with the possibility of being used to obtain a rectilinear movement without the need for gears or other motion transformation systems (as happens with normal rotary motors), find multiple applications, from weapons to machine tools, from the space industry to the automotive industry.

In particular, the known linear motors have external portions made of metal, generally aluminum or stainless steel.

However, these known motors are not fully satisfactory as the motors are generally made in predefined colors, in particular generally leaving the metallic color of the components. This is not fully satisfactory when these motors are positioned within sight of a user in contexts in which the aesthetic result is a fundamental characteristic, such as in the case of furniture, whether for interiors or exteriors.

Furthermore, it is not possible to paint the engines themselves with the methods generally used to paint other furnishing accessories, in particular made of metal, for example steel or aluminium, since these processes generally require the use of high temperatures which could damage the plastic equipment and the electronics inside the engines.

US2014/361641 describes a linear actuator which includes two tubes, respectively a first tube and a second tube, inserted into each other. The first tube is composed of an internal tubular portion and a guiding tubular portion. The second tube slides relative to the inner tubular portion of the first tube as current flows through coils which are housed in a tubular coil holder.

US2019/157961 describes a linear actuator comprising a housing and a linear actuator with magnets; in particular, the magnets are mounted on a tubular moving part and cooperate with the stator windings located in the housing.

### OBJECTS OF THE INVENTION

The aim of the invention is to propose a covering element for a motorization device, which allows the drawbacks of known solutions to be overcome, at least in part.

Another aim of the invention is to propose a motorization apparatus which allows the drawbacks of known solutions to be overcome, at least in part.

Another aim of the invention is to propose a covering element for a motorization device which is simple, easy and quick to assemble and/or mount, thus allowing to obtain a corresponding kit composed of the motorization device and the covering element to be installed in correspondence with a roofing installation.

Another aim of the invention is to propose a kit for the motorization of a roofing installation, in which said kit has external and visible walls of a desired color and, in particular, of the same color as the installation components and/or or the roofing structure in which it is installed, and this without causing any damage or functional alteration to the motorization device.

Another aspect of the invention is to propose a motorization apparatus, a kit and an installation which allow to obtain a pleasant overall aesthetic effect and which provides the observer with the sensation of being faced with a high quality product, both on an aesthetic level how functional.

Another aim of the invention is to propose a covering element, a motorization apparatus, a kit and an installation which have an alternative characterisation, both in constructive and functional terms, compared to traditional ones.

Another aim of the invention is to propose a covering element, a motorization apparatus, a kit and an installation which can be obtained in a simple, rapid and low-cost manner.

Another aim of the invention is to propose a covering element for a motorization device that can be produced in series and in a rapid and efficient manner.

Another aim of the invention is to propose a covering element, a kit and an installation that are of high standards, both functional and aesthetic, and at the same time of affordable cost, thus allowing the possibility of its large-scale diffusion.

### SUMMARY OF THE INVENTION

All these aims, considered individually or in any combination thereof, and others that will result from the following description are achieved, according to the invention with a covering element for a motorization device as defined in claim 1, with an apparatus or kit as defined in claim 9 and with a cover installation as defined in claim 14.

### DESCRIPTION OF THE FIGURES

The present invention is further clarified below in some of its preferred practical embodiments reported for purely illustrative and non-limiting purposes with reference to the attached drawings, in which:

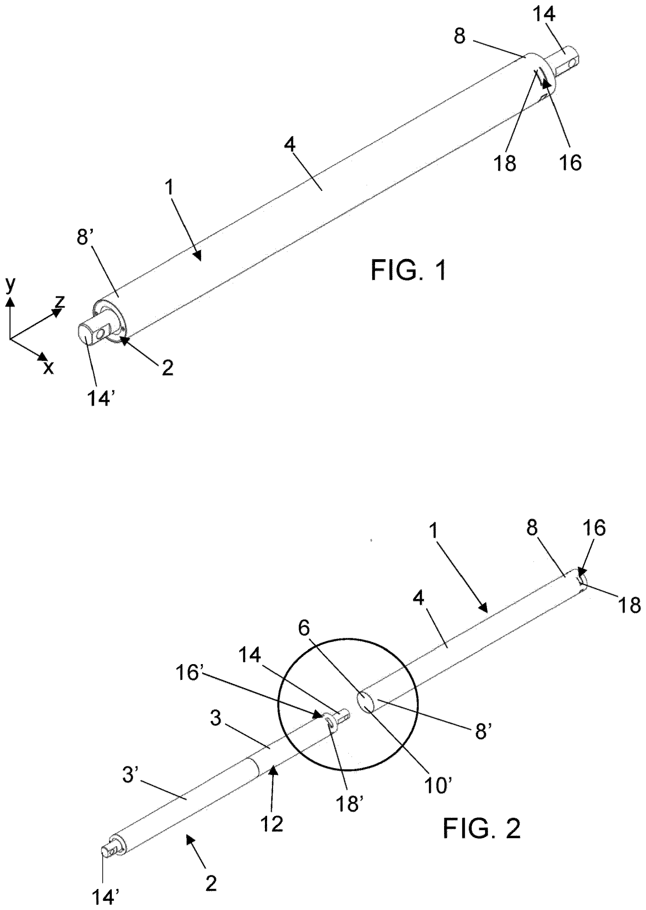

- figure 1: shows a perspective view of the covering element according to the invention associated with a motorization device,
- figure 2: shows an exploded perspective view of the covering element according to the invention and a motorization device,

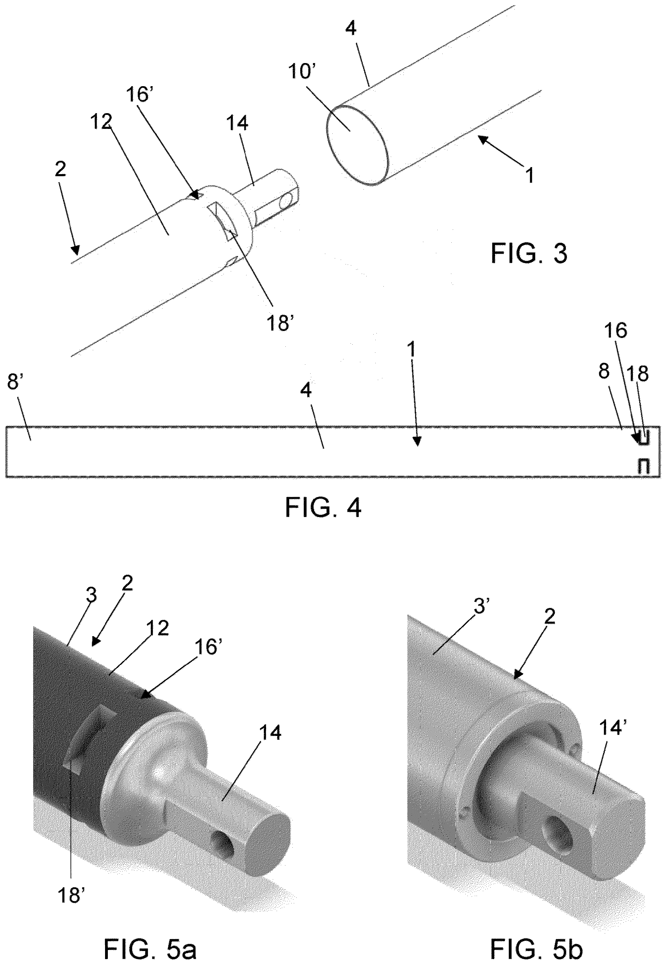

- figure 3: shows a detail of fig. 2,
- figure 4: shows the element according to the invention in a side view,
- figure 5a: shows the primary end of a motorizing device,
- figure 5b: shows the secondary end of a motorization device,

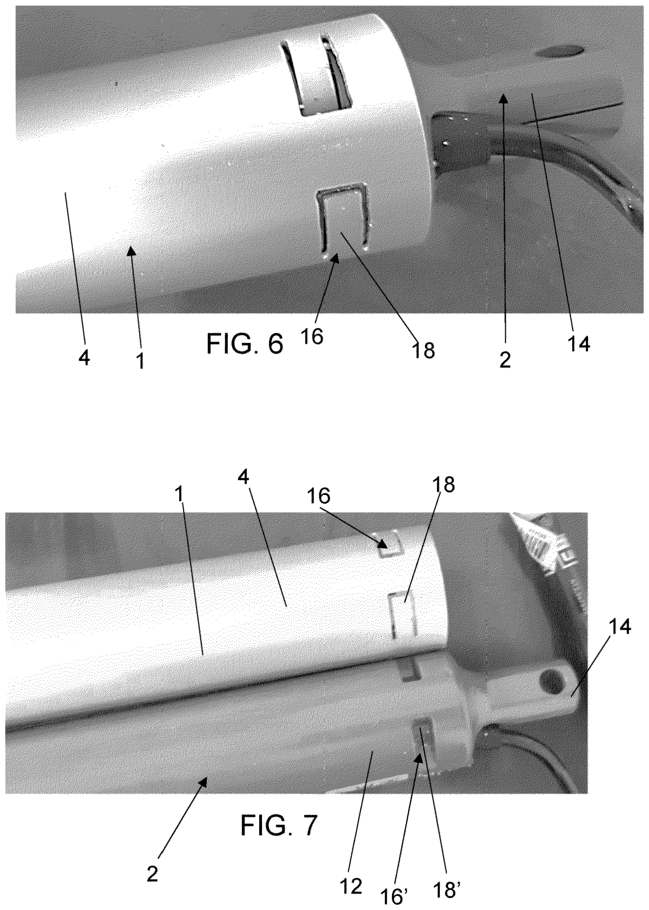

- figure 6: shows a photo of a detail of the primary end of a motorization device with the element according to the invention, and
- figure 7: shows a photo of a detail of the primary end of a motorization device and the element according to the invention side by side.

### DETAILED DESCRIPTION OF THE INVENTION AND SOME OF ITS PREFERRED FORMS OF EMBODIMENT

As can be seen from the figures, the present invention relates to a covering element 1 for a motorization device 2 of the type which is configured to provide a linear movement out of the device itself. Conveniently, the motorization device 2 comprises an electric motor which can substantially be of the traditional type.

Conveniently, the motorization device 2 can have a structure elongated along a Z axis.

The motorization device 2 can comprise a primary or fixed portion 3 to which a primary or fixed attachment 14 is associated and a secondary or mobile portion 3' to which a secondary or mobile attachment 14' is associated.

The fixed portion 3 includes a tubular casing 12 inside which the said electric motor is housed. In particular, the electric motor is completely and entirely housed inside the tubular casing 12. More in detail, the electric motor is housed only inside the fixed portion 3. Conveniently, it is housed inside the tubular casing 12. the electric motor as such, i.e. with all the components that make up the electric motor itself.

Conveniently, in a possible embodiment, the mobile portion 3' includes a stem which is moved so as to emerge from the tubular casing 12 or re-enter inside said tubular casing 12.

Conveniently, the attachments 14, 14' are configured to be associated with further elements of the covering installation which must be reciprocally moved, for example a mobile covering and the support frame of said mobile covering. Conveniently, the connections 14, 14' protrude from the opposite ends of the tubular casing 12.

In particular, the electric motor is configured to cause the linear movement of the mobile portion 3' with respect to the fixed portion 3. More in detail, the mobile portion 3' is moved with respect to the fixed portion 3 and, consequently, the two attachments 14, 14' are configured to move linearly with respect to each other, for example along the Z axis. In particular, the distance "d" between the two attachments 14, 14' can vary during the normal operation of the motor 2 between a first condition in which the two connections 14, 14' are at the maximum distance and a second condition in which the two connections 14, 14' are at the minimum distance.

Conveniently, the motorization device 2 can be used to move a covering (not shown) of an installation, for example a roller shutter, a shutter, a Pompeian or other. In particular, the motorization device 2 can be positioned, at least partially, in a position visible to a user, for example outside.

Conveniently, the covering element 1 for the motorization device 2 can have a substantially elongated shape, thus defining a major axis, substantially parallel to the Z axis and a section that develops on an XY plane, which preferably is perpendicular to the Z axis where X, Y and Z define a trio of axes substantially perpendicular to each other.

The covering element 1 for the motorization device 2 includes a housing structure 4 configured to house inside it at least the tubular casing 12 of said fixed portion 3 of the motorization device 2. Conveniently, the housing structure 4 has a elongated development and, preferably, has a substantially tubular conformation.

Conveniently, no further elements are interposed between the housing structure 4 of the covering element 1 and the tubular casing 12 of the motorization device 2, which is inserted inside the structure. In particular, no further elements are wrapped or mounted around the tubular casing 12.

Preferably, the housing structure 4 is made of metallic material.

Preferably, the housing structure 4 is painted in a desired color before inserting the tubular casing 12 of the motorization device 2 inside it.

Conveniently, said housing structure 4 defines or constitutes a covering casing for the motorization device 2.

Conveniently, the housing structure 4 is configured to allow the insertion inside it of the tubular casing 12 of the fixed portion 3 of the motorization device 2.

Preferably, the housing structure 4 is configured so that the tubular casing 12 of the motorization device 2, when the latter is in said second condition in which the two connections 14, 14' are at the minimum distance, is completely housed /inserted inside said housing structure 4, thus being completely covered by said structure.

Preferably, the housing structure 4 of the element 1 can include at least one wall which defines inside it a cavity 6 configured to house the motorization device 2 to be covered.

Advantageously, the housing structure 4 includes, at each of its ends 8 and 8', opposite to each other, a corresponding opening - 10 and 10' respectively - for access to the cavity 6.

Conveniently, the housing structure 4 of the element 1 can have a size and shape substantially corresponding to those of the tubular casing 12 of the motorization device 2 to be covered. In particular, the housing structure 4 can have a dimension - and in particular an extension along the Z axis - which substantially corresponds to that of the motorization device 2 when the latter is in said second condition.

Conveniently, it is understood that the shape and dimensions of the housing structure 4 are not linked to those of the tubular casing 12 although they must evidently be compatible with them. In particular, the housing structure 4 has a shape and size suitable for allowing the tubular casing 12 of the motorization device 2 to be inserted and housed inside it.

In particular, the housing structure 4 of the element 1 can have a dimension - and in particular an extension along the Z axis - substantially corresponding to that of the motorization device 2 without the connections 14, 14'

Preferably, the cavity 6 can have a dimension along the Z axis such as to contain only the tubular casing 12 of the device 2, while the connections 14, 14' protrude, thus allowing the connection of these with suitable further components.

Preferably, the cavity 6 is configured - both in terms of dimensions and shape - to allow the sliding insertion and with minimal play of the tubular casing 12 of the device 2. Preferably, the difference in dimensions between the cavity 6 and the tubular casing 12 of the device 2 can be such as to allow the insertion and removal of the casing itself inside the cavity itself in a simple and rapid manner.

Preferably, the housing structure 4 of the covering element 1 has a longitudinal extension substantially corresponding to that of the tubular casing 12 of the motorization device 2.

In a possible embodiment, the cavity 6 of the housing structure 4 is configured to allow the insertion of the tubular casing 12 of the device 2 inside the cavity 6 and so that the sliding contact between the external wall of the tubular casing 12 and the internal wall of the housing structure 4 create friction such as to prevent or make it particularly difficult to remove the casing 12 from the cavity 6.

Conveniently, the element 1 can include means for association 16 with the tubular casing 12, in particular to stabilize the positioning of the housing structure 4 on the casing 12 along the respective longitudinal axes of development. Preferably, the association means 16 are configured to allow their stable and reversible association with the motorization device 2, in particular with the casing 12 of the device 2.

Conveniently, the motorization device 2 can comprise, preferably in correspondence with the tubular casing 12, suitable corresponding counter-association means 16' configured to cooperate with said association means 16. Preferably, said counter-association means 16' are in at and/or near the outermost end of the fixed portion 3 of said motorization device 2.

In a preferred embodiment, said association means 16 can comprise a plurality of shaped portions 18 configured to fit into corresponding counter-shaped portions 18' obtained on the tubular casing 12 of the motorization device 2 and, preferably, at and/ or near the end of the tubular casing 12 of the device 2 which is located near the primary connection 14. Alternatively, in one possible form, the counter-shaped portions can be obtained at the end of the mobile portion 3' of the device 2 which is located near the secondary connection 14'.

In a possible alternative embodiment (not shown), said association means 15 can include fixing members ( for example screws) configured to engage within corresponding seats (for example defined by threaded holes ) obtained on the tubular casing 12 of the motorization 2, at and/or near the end of the tubular casing 12 of the device 2 which is located near the primary attachment 14. Alternatively, the seats for engaging the fastening members can be made at of the end of the mobile portion 3' of the device 2 which is located near the secondary connection 14'.

Advantageously, the element 1 is constituted only by said housing structure 4. Preferably, the housing structure 4 is made of metallic material, for example aluminum. Preferably, the housing structure 4 is made of painted aluminium. Alternatively, in a possible embodiment, the housing structure 4 can be made of plastic material.

Conveniently, at least the external walls of the housing structure 4 have the same color as the covering installation moved by the device 2.

Conveniently, the entire element 1 - and preferably the entire housing structure 4 - has the same color as the covering installation moved by the device 2.

The present invention also concerns a motorization apparatus comprising a motorization device 2 and a covering element 1 as described above.

The present invention also concerns a kit for the motorization of a roofing installation comprising a motorization device 2 and at least one roofing element 1 as described above. Conveniently, in a possible embodiment, the kit can comprise a plurality of covering elements 1, having the respective housing structures that are structurally identical to each other but of at least two different colours. Advantageously, this allows you to select, among the plurality of covering elements 1 of the kit, the one having the housing structure 4 with the most suitable color for the installation and to insert the casing 12 of the motorization device 2 inside the covering element thus selected.

The present invention also concerns a covering installation comprising a mobile covering, for example a tent/pergola or similar, which is moved by said motorization device 2, in which the tubular casing 12 of the device 2 is housed inside the the covering element 1. In particular, the covering element 1 is visible during the use of said installation, thus completely or in any case mostly covering the tubular casing 12 of said device 2. Advantageously, said covering element cover 1 can be painted the same color as said support frame and/or said mobile cover.

From what has been said it is clear that the solution according to the invention is quite advantageous as:
- allows you to easily and easily customize and adapt the corresponding color of the visible parts of the motorization device and, in particular, thus allows you to have the same color as the roofing installation and therefore a more pleasant and less impactful integration into the interior of the installation itself, e
- allows quick, practical and easy assembly and mounting of the device itself,
- it can be assembled by the person who produces and/or paints the casing and the installation,
- it can also be easily assembled during the installation phase as the use of any particular tools is not required for this operation.

In particular, unlike US2014/361641 and US2019/157961, in the solution according to the present solution the covering element houses the tubular casing inside it and the latter, in turn, contains the electric motor of the motorization device.

## Claims

1. Cover element (1) for a motorizing device (2), said motorizing device (2) being of the type configured to provide a linear output movement and comprising:
- a primary or fixed portion (3) comprising a tubular casing (12),
- a secondary or mobile portion (3'),
- an electric motor housed in said tubular casing (12) and configured to cause the linear movement of said secondary or mobile portion (3') with respect to said primary or fixed portion (3),
- a primary attachment (14) associated with said fixed portion (3) and a secondary attachment (14') associated with said mobile portion (3'), said primary attachment (14) and said secondary attachment (14') being configured to be associated with respective elements of an installation to be moved mutually,
said covering element (1) being **characterized by** the fact that it includes a housing structure (4) having a substantially tubular shape and configured to house within it at least the tubular casing (12) of said fixed portion (3) of the motorization device (2).

2. Covering element according to claim 1, **characterized in that** said housing structure (4) is made of metallic material.

3. Covering element according to one or more of the previous claims, **characterized in that** said housing structure (4) is painted in a desired color before inserting the motorization device (2) inside it.

4. Covering element according to one or more of the previous claims **characterized by** the fact of comprising association means (16) configured to allow the association of the housing structure (4) on the casing (12) so as to prevent their mutual movement along the respective axes of longitudinal development.

5. Covering element according to claim 4 **characterized by** the fact that said association means (16) comprise at least one shaped portion (18) configured to mechanically engage by interlocking or in shape relationship in at least a corresponding counter-shaped portion (18') obtained in said motorization device (2).

6. Covering element according to claims 5 or 6 **characterized by** the fact that said association means (16) include fixing members integral with the housing structure (4) or passing through holes defined in the housing structure (4) to engage in corresponding seats obtained in said motorization device (2).

7. Covering element according to one or more of the previous claims **characterized by** the fact of being constituted by said housing structure (4) of substantially tubular shape which is configured to cover the entire longitudinal development of the motorization device (2) with the exception of said connections (14).

8. Covering element according to one or more of the previous claims **characterized in that** the housing structure (4):
- includes at least one wall which defines a cavity (6) inside it configured to house the motorization device (2) to be covered,
- it includes, at each of its ends (8, 8'), opposite each other, a corresponding opening (10, 10') for access to the cavity.

9. Apparatus or kit for the motorization of a roofing installation **characterized by** the fact that it includes:
- at least one covering element (1) according to one or more of the previous claims,
- a motorizing device (2) of the type configured to provide a linear output movement, said device comprising:
- a primary or fixed portion (3) comprising a tubular casing (12),
- a secondary or mobile portion (3'),
- an electric motor housed in said tubular casing (12) and configured to cause the linear movement of said secondary or mobile portion (3') with respect to said primary or fixed portion (3),
- a primary attachment (14) associated with said fixed portion (3) and a secondary attachment (14') associated with said mobile portion (3'), said primary attachment (14) and said secondary attachment (14') being configured to be associated with respective elements of an installation to be moved mutually,
said apparatus or kit being further **characterized by** the fact that it includes means for associating the housing structure (4) of the covering element (1) on the casing (12) of the motorization device (2) so as to prevent their mutual movement along the respective axes of longitudinal development.

10. Apparatus or kit according to the previous claim **characterized by** the fact that the covering element (1) includes association means (16) configured for stable and reversible association with the casing (12) of the motorization device (2).

11. Apparatus or kit according to claims 9 or 10, **characterized in that** said motorization device (2) includes counter-association means (16') configured to cooperate with association means of the covering element (1) which, preferably, they are provided at and/or near the outermost end of the fixed portion (3) of said motorization device (2).

12. Apparatus or kit according to one or more of claims 9 - 11, **characterized in that** said housing structure (4) of the covering element has a longitudinal extension substantially corresponding to that of the tubular casing (12) of the motorization device (2) .

13. Apparatus or kit according to one or more of claims 9 - 11, **characterized in that** the cavity (6) of the housing structure (4) of the covering element (1) is configured to allow the insertion of the tubular casing (12 ) of the motorization device (2) inside the cavity (6) so that the sliding contact between the external wall of the tubular casing (12) and the internal wall of the housing structure (4) creates friction sufficient to prevent or make it particularly difficult to remove the casing (12) from the cavity (6).

14. Covering and/or closing installation, **characterized by** the fact that it includes:
- an apparatus or a kit according to one or more of claims 9 to 13,
- a support frame for a mobile cover,
- a mobile cover which is moved with respect to said support frame by said motorization device (2) of said apparatus or kit,
and **characterized by** the fact that at least the tubular casing (12) of the motorization device (2) of said apparatus or kit is housed inside the covering element (1) of said apparatus or kit which is thus visible during the normal use of said installation, thus covering the tubular casing (12) of said device (2).

15. Installation according to the previous claim **characterized by** the fact that said covering element (1) is painted in the same color as said support frame and/or said mobile cover.
